# EUROPEAN PATENT APPLICATION

(11) **EP 4 738 839 A1**
(43) Date of publication of application: **06.05.2026**
(21) Application number: 24306850.9
(22) Date of filing: 01.11.2024
(51) Int. Cl.: H04N 21/234, G06T 13/00, G06T 17/00, H04N 21/81, H04N 21/854

(54) **CONTROLLERS IN MPEG AVATAR REPRESENTATION FORMAT**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR); QUENTIN, Avril, 35830 Betton (FR)
(74) Representative: Vossius & Partner Patentanwälte Rechtsanwälte mbB

(57) **Abstract**

Some embodiments of a method may include: obtaining a MPEG Avatar Representation Format (MARF)-based file; parsing the MARF-based file into a data structure; selecting an asset from the data structure; verifying the asset comprises a controller set property; obtaining controller set data corresponding to the controller set property; obtaining container data using the controller set data; determining a mime type using the controller set data; decoding the container data using the mime type; obtaining a mesh and a skeleton using the container data; and animating an avatar corresponding to the mesh and the skeleton.

## Description

### INCORPORATION BY REFERENCE

The present application incorporates by reference in their entirety the following applications: International Patent Application Serial No. PCT/EP2024/078214, entitled "AVATAR JSON INTERCHANGE FILE FORMAT" and filed October 8, 2024 (‴214 application"); European Patent Application Serial No. EP24306391, entitled "CARRIAGE FORMAT FOR AVATAR CONTROLLERS" and filed August 23, 2024 ("`391 application"); International Patent Application Serial No. PCT/EP2024/068034, entitled "CONTROLLERS FOR 3D SCENE DESCRIPTIONS" and filed June 26, 2024 (‴034 application"); European Patent Application Serial No. EP24305458, entitled "AVATAR CONTROLLERS IN SCENE DESCRIPTIONS" and filed March 27, 2024 ("`458 application"); European Patent Application Serial No. EP24305094, entitled "AVATAR JSON INTERCHANGE FILE FORMAT" and filed January 15, 2024 (‴094 application"); and European Patent Application Serial No. EP23306167, entitled "CONTROLLERS FOR 3D SCENE DESCRIPTIONS" and filed July 10, 2023 (‴167 application").

### BACKGROUND

The present application is related to avatar controllers.

### SUMMARY

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a MPEG Avatar Representation Format (MARF)-based file; parsing the MARF-based file into a data structure; selecting an asset from the data structure; verifying the asset comprises a controller set property; obtaining controller set data corresponding to the controller set property; obtaining container data using the controller set data; determining a mime type using the controller set data; decoding the container data using the mime type; obtaining a mesh and a skeleton using the container data; and animating an avatar corresponding to the mesh and the skeleton.

For some embodiments of the example method, animating the avatar corresponding to the mesh and the skeleton comprises applying one or more transformations to the mesh associated with the avatar.

For some embodiments of the example method, the controller set data comprises the one or more transformations.

For some embodiments of the example method, the controller set data comprises a link to a location storing a set of controller data structures corresponding to the avatar.

For some embodiments of the example method, the link comprises a Uniform Resource Identifier (URI).

For some embodiments of the example method, the link comprises an index into a data location array.

Some embodiments of the example method may further include retrieving information corresponding to the avatar using the link.

For some embodiments of the example method, the MARF-based file comprises a container corresponding to controller data for the avatar.

For some embodiments of the example method, parsing the MARF-based file into a data structure comprises determining one or more links to data structures corresponding to the avatar.

For some embodiments of the example method, the data structure complies with a MARF-based format

For some embodiments of the example method, the container data comprises information corresponding to at least one of a mesh, a skeleton, a mime type, and a location of the avatar.

For some embodiments of the example method, the mime type identifies a format of a controller associated with the avatar.

For some embodiments of the example method, the mime type identifies at least one of an Avatar JSON Interchange Format (AJIF)-based format, and a Graphics Library Transmission Format (gITF)-based format.

For some embodiments of the example method, the location of the avatar comprises a Uniform Resource Identifier (URI).

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example combination of two controllers to animate an avatar gaze according to some embodiments.
FIG. 3 is a flowchart illustrating an example process for parsing a MARF file with controllers according to some embodiments.
FIG. 4 is a flowchart illustrating an example process for generating an avatar controller data structure according to some embodiments.
FIG. 5 is a flowchart illustrating an example process for generating an avatar controller data structure according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

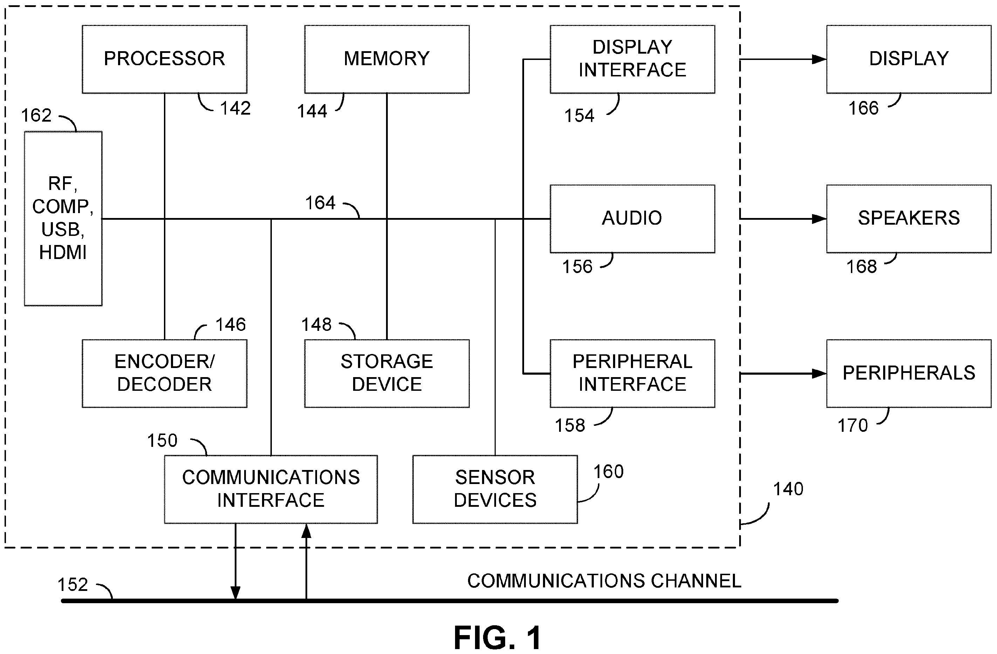

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

The domain of the application is the encoding of avatar controllers in the MPEG Avatar Representation Format (MARF). Controllers are a generalization of morph targets (also called blendshapes), which allow more complex transforms than a single linear deformation of a mesh. The MARF structure will be introduced in the MPEG-I Scene Description through the input contribution Bouazizi, Imed, et al., MPEG Avatar Representation Format, m69882, Version 1, MPEG-I, WG 03 MPEG Systems (Oct. 28, 2024)("m69882"), and the structure allows the encoding of an avatar and animation streams.

### Controllers

Controllers are features widely used in industry to animate rigs, including humanoid rigs. There are, to some extent, enhanced morph targets (or blendshapes). Like morph targets, a weight is attached to each controller. A zero weight usually has no effect. A positive weight starts the modification of the shape. A negative weight may have an inverse modification. There is a weight range for each controller. The amount of modification is controlled and cannot go beyond predefined values.

However, contrary to morph targets as understood, modifications are not limited to a weighted addition of vertex displacements. A controller may perform any modification of a mesh given a weight. Furthermore, the effect of the weight may be non-linear, while morph targets are understood to support only linear weight combinations.

In a way, a controller looks like an animation, except that time is replaced by a weight, and a weight may be negative. An animation may be seen as a (possibly non-linear) function of time that maps a modification of the shape. Depending on the encoding format (like Avatar JSON Interchange Format (AJIF) or Graphics Library Transmission Format (gITF)), an animation may make many different modifications, like changing the morph target weights or changing the transform of a node. However, animations are made to do modifications from time 0 to the end of its time range. They are not supposed to be run with arbitrary time values. Furthermore, as understood, animations are not made to be combined, especially with different and arbitrary positive time positive values. On the other hand, controllers, like morph targets, are made to be combined with different arbitrary weight values (positive or negative).

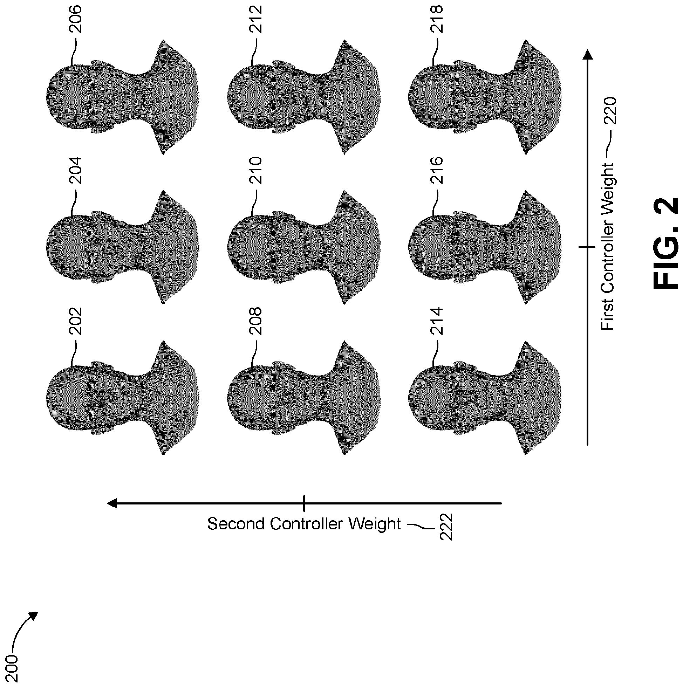

FIG. 2 is a schematic illustration showing an example combination of two controllers to animate an avatar gaze according to some embodiments. FIG. 2 shows a combined controller configuration 200. The first controller updates two morph targets (one which moves eyelids to the left, the other to the right) and two joint transforms (one transform for rotation around the Y axis of the left eye, the other transform for the right eye). The second controller updates two morph targets (one morph target moves eyelids upwards, the other morph target moves eyelids downwards) and two joint transforms (one transform for rotation around the X axis of the left eye, the other transform for the right eye).

The first controller animates the eyes from left to right using weight *w*₁, the first controller weight 220. The center row of FIG. 2 shows the avatar state when weight *w*₁ = -1 (left avatar 208), when weight *w*₁ = 0 (center avatar 210) and when weight *w*₁ = 1 (right avatar 212). The second controller animates the eyes from bottom to top using weight *w*₂, the second controller weight 222. The center column of FIG. 2 shows the avatar state when weight *w*₂ = -1 (bottom avatar 216), when weight *w*₂ = 0 (center avatar 210) and when weight *w*₂ = 1 (top avatar 204).

These two controllers may be used together to create numerous gazes. For example, the top-right avatar 206 in the figure shows a state when both controllers have the same weight, e.g., *w*₁ = 1 and *w*₂ = 1. The top-left avatar 202 in the figure is for first controller weight *w*₁ = -1 and second controller weight *w*₂ = 1. The bottom-left avatar 214 in the figure shows a state when both controllers have the same weight, e.g., *w*₁ = -1 and *w*₂ = -1. The bottom-right avatar 218 in the figure is for first controller weight *w*₁ = 1 and second controller weight *w*₂ = -1.

Controllers cannot be replaced by animations because such a replacement is understood to lead to an unscalable number of animations. The power of using controllers resides in the fact that numerous (if not infinite) shape modifications may be made using combinations of weights.

On the implementation side, the encoding/decoding may use existing encoding procedures. The main missing property is the controller weights (a single property, like "weights" for morph targets). For the rendering/usage, the problem could look complex because of the combination of modification. However, there are smart solutions which lead to short and efficient implementations.

Animations may be created with the modification of controller weights, like they do already with morph target weights.

The current MPEG-I Scene Description (SD) format using the MPEG_node_avatar extension allows the definition of an avatar model. Thanks to these features, applications may identify which mesh represents an avatar and use that mesh accordingly. For instance, if an avatar is a usual human body mesh, an application may place the mesh within a scene and allow the user to move the mesh in the world. Using the `458 and `167 applications, an avatar with controllers may be signaled using a glTF file. The AJIF format introduced in the '094 application may encode an avatar with controllers.

In all current formats which supports controllers, the controllers and all their parameters are stored using a dedicated encoding format and cannot use another one. An application that wishes to encode an avatar using the glTF format must encode the avatar controllers with the glTF controllers encoding. If, for some reason, the application needs to use controllers that cannot be encoded in the glTF format, the signaling is lossy and/or not possible.

An additional file may be provided where controllers are encoded alongside the main avatar file (like AJIF or gITF). In this case, the application may use a format that supports all the controllers features for encoding controllers while using a main avatar file for main components, like meshes or textures. The problem with such a methodology is that the application has to know the additional file that contains the controllers, and how to connect the components in the main avatar file to the controllers.

For some embodiments, this application uses a configuration based on MARF, where controllers are stored in a container outside the MARF file. Then, the MARF file refers to this container, as well as the information used to link the controllers to the avatar.

For some embodiments, AJIF and/or glTF may be used in which similar information is signaled to retrieve the controller data and to link them to the avatar.

### Signaling with MARF

### MPEG Avatar Representation Format

The MPEG Avatar Representation Format (MARF) introduced in MPEG- I SD contribution m69882 is a representation for 3D animatable avatars that is developed by MPEG. The MARF serves two purposes: (1) To provide an exchange format that allows users to capture their 3D avatars once and import the avatars for use anywhere across applications, platforms, and metaverse worlds; and (2) To provide a standardized interoperable storage and exchange animation format that applications and services may build on.

The MARF includes two components: a base avatar container and animation streams. The base avatar container is a container that stores all components of the user's avatar. This includes meshes, skeletons, and blendshapes. The animation streams are a set of streams that are formatted according to this specification and are used to animate the base avatar model in the container. Body animation through Linear Blend Skinning and facial expressions through blendshapes are supported.

As understood, the MARF does not support signaling of controllers and is limited to morph targets (or blendshapes).

### Components

A "controllers" component is added to the components of the MARF, as shown in Table 1.

**Table 1.**

| **Object/Property Name** | | | | **Type** | **Use** | **Description** |
|---|---|---|---|---|---|---|
| components | | | | object | M | The core of the MARF document, listing all components of the MARF container. |
| | | skeletons | | array(object) | M | Contains a list of skeletons, each with a name and set of joints. |
| | | | name | string | M | The name of the skeleton. |
| | | | joints | array | M | Contains a list of joint ids. A skeleton may be a subset of a full humanoid skeleton, e.g. just by referencing the head and hand joints. |
| | | skins | | array(object) | M | Contains a list of skins, each with a name and the skinned meshes associated with it. |
| | | | name | string | M | The name of the skin. |
| | | | skinnedMeshes | array | M | An array of numbers representing the IDs of the meshes associated with this skin. |
| | | blendshapes | | array(object) | M | Contains a list of blendshape sets, each with a basis mesh, encoding, and shapes. |
| | | | basisMesh | number | M | The ID of the mesh that the blendshapes are based on. |
| | | | encoding | string | M | The encoding used for the blendshapes. |
| | | | shapes | array | M | Contains a list of shapes, each with an ID, name, and the ID of the mesh representing the shape. |
| | | joints | | array(object) | M | contains a list of joints, each with an ID, name, parent joint ID, transform matrix, and an optional inverse bind matrix. |
| | | | id | number | M | a unique identifier of this joint in the MARF container. |
| | | | name | string | M | a name assigned to the joint. |
| | | | parent | number | O | if present, the id of the parent joint of this joint. The root joint shall not have an assigned parent. |
| | | | transform | array(number) | M | Provides the 4x4 transform matrix for the joint to define the position and orientation of the joint at rest pose. |
| | | | inverseBindMatrix | array(number) | O | provides the inverse bind matrix for this joint. If present the location of the joint shall be adjusted by multiplying with the inverse bind matrix. |
| | | meshes | | array | M | Contains a list of meshes, each with an ID, skinned status, levels of detail (LODs), and a name. |
| | | | id | number | M | The ID of the mesh. |
| | | name | | string | M | The name of the mesh. |
| | | skinned | | boolean | M | Indicates whether the mesh is skinned (true) or not (false). |
| | | lods | | array | M | Contains a list of LODs, each with LOD number, MIME type, location, embedded weights status, joint weights, and protection information. |
| | | | lod_id | number | M | The number identifying the LoD with which this representation is associated. |
| | | | mime | string | M | The MIME type that identifies the format of the mesh. In this version of the specification, it shall be set to "model/gltf-binary". |
| | | | location | URI | M | Location of the LoD representation of this mesh. In this version of the specification, this shall be a pointer to a GLB file. |
| | | | embedded_ weights | boolean | O | Indicates whether the mesh also comes with the LBS weights for each vertex, associated with the identified joint sets. The default value is false. If set to true, the author needs to ensure that the embedded joint set also matches the one associated with this skinned mesh. This element shall not be present if "skinned" is set to false. |
| | | | joint_weights | URI | O | A link to the location of a binary file that provides a list of joint ids and associated LBS weights for every vertex in this LoD mesh representation. This element shall not be present if "skinned" is set to false. |
| | | | compression | string | O | An identifier of the compressor used to compress this LoD representation of the mesh. |
| | | | protection | id | O | An identifier of the protection configuration that is applied to encrypt this LoD representation of the mesh. |
| | | proprietary_animation | | object | O | This object may provide information about an ML-based proprietary model for reconstruction and animation of the user's avatar. |
| | | | scheme | URI | M | A vendor-specific URN to identify the proprietary reconstruction and animation scheme. |
| | | | items | array(uri) | M | A list of the items, e.g., pretrained models or model weights, that are used by this proprietary reconstruction and animation scheme. |
| | | controllers | | array(object) | M | Contains a list of controller sets, each with a mesh, skeleton, MIME type, and location URI. |
| | | | mesh | number | M | The ID of the mesh on which the controllers are based. |
| | | | skeleton | number | M | The ID of the skeleton on which the controllers are based. |
| | | | mime | string | M | The MIME type that identifies the format of the controllers. |
| | | | location | URI | M | Location of the controllers data. This data must be consistent with the mesh referenced by "mesh" and with the skeleton referenced by "skeleton". |

The "controllers" property is a property of the "components" root property of MARF. The "controllers" property is an array of objects with the following properties: mesh, skeleton, mime, and location. The mesh property is the ID of a mesh in the MARF file on which the controllers are based. The skeleton property is the ID of a skeleton in the MARF file on which the controllers are based on. The mime property is the MIME type of the data referenced by location. For instance, the mime property may be "model/gltr' or "model/ajif". The location property is the Uniform Resource Identifier (URI) of the container with the "controllers" property data is encoded using the format indicated by "mime".

The definition of the controllers in the container referenced by "location" must be consistent with the mesh referenced by "mesh" and by the skeleton referenced by "skeleton". In other words, all modifications made by a controller in "location" must be run using the mesh referenced by "mesh" and the skeleton referenced by "skeleton".

### Structure

A "controller_set" property is added to the assets in the structure of the MARF as shown in Table 2.

**Table 2.**

| **Object/Property Name** | | | | **Type** | **Use** | **Description** |
|---|---|---|---|---|---|---|
| structure | | | | object | M | Contains data related to the structure of the MARF container. |
| | | lods | | number | M | Specifies the levels of detail included in this MARF container. |
| | | assets | | array | M | Lists the assets included in this MARF container. |
| | | | name | string | M | The name of the asset. |
| | | type | ASSET_TYPE | M | The type of the asset. The following types are supported: | |
| | | | | | | • BODY |
| | | | | | | • HEAD |
| | | | | | | • HAND |
| | | | | | | • ACCESSORY |
| | | | | | This list is extensible and may be extended in future versions of this specification. | |
| | | skeleton | number | O | The id of the skeleton associated with this asset. | |
| | | blendshape_set | number | O | The id of the blendshape set associated with the asset. | |
| | | controller_set | number | O | The id of the controller set associated with the asset. | |
| | | skin | number | O | The skin associated with the asset. | |
| | | meshes | array(number) | M | An array of identifiers of the meshes that build this asset. | |
| | protection | | object | M | Contains information about the encryption scheme used to protect the MARF container. | |
| | | schemeld | string | M | The identifier of the encryption scheme. | |
| | | schemeInfoData | string | M | Additional information about the encryption scheme. | |

The "controller_set" property introduced by this disclosure refers to a controller set defined in the MARF "controllers" component (defined in the previous section). An asset with this property may use the controllers referenced by its "controller_set" property to animate the avatar.

### Signaling with AJIF

The AJIF format was introduced in the '094 application.

### Levels of Detail (LOD)

The AJIF LOD property is extended with a "remoteControllers" property, as shown in Table 3.

| **Name** | **Type** | **Description** | **Required** |
|---|---|---|---|
| name | string | LOD name. | No |
| lod | integer | Indicates the level of details. Lower values correspond to a higher level of details. | No, default 0 |
| mesh | integer | References a node in the "nodes" collection. | No |
| skeletons | integer[1-*] | List of references to skeletons in the *"skeletons"* collection. | No |
| controllers | integer[1-*] | List of references to controllers. If "remoteControllers" is not present, then references are in the *"controllers"* collection. If "remoteControllers" is present, then references are in the data referenced by "remoteControllers". | No |
| remoteControllers | string | URI where controllers data may be found. | No |

### Table 3.

The "remoteControllers" property is introduced by this disclosure and is an URI where the controllers data may be found. If present, then the "controllers" property references controllers in the container referenced by "remoteControllers".

### Signaling with gITF

The `458 application introduced signaling for controllers in gITF.

### MPEG_node_avatar

The `458 application added a "controllersets" property in the MPEG_node avatar property extension, as shown in Table 4.

**Table 4.**

| **Name** | **Type** | **Description** | **Required** |
|---|---|---|---|
| isAvatar | boolean | If true, this node contains the root of an avatar mesh. | Yes |
| type | string | The type of the Avatar representation is provided as a URN. | Yes |
| mappings | AvatarMapping[1-*] | The mapping between child nodes and semantics. | Yes |
| controllersets | AvatarControllerSet[1 -*] | Avatar controller set definitions. | No |

Each item in the "controllersets" list defines a controller set for the avatar and how to use the controller set. An avatar controller set regroups several avatar controllers for a given purpose, for instance, an avatar controller set may be dedicated to avatar movements (walk, run, and idle, among others) and another one to facial expressions.

In some embodiments, avatar controller sets are replaced by the AvatarController[] array list shown below. These embodiments provide fewer features since there is a single set of avatar controllers but use less memory.

### AvatarControllerSet

The AvatarControllerSet property is shown below in Table 5, with a "location" property added.

**Table 5.**

| **Name** | **Type** | **Description** | **Required** |
|---|---|---|---|
| description | string | Describe the avatar controller set and its purpose (to be used in UI for instance). | No |
| purpose | string | Identifies the main purpose of the avatar controller set (for the application). | Yes |
| controllers | AvatarController[1 -*] | Information for each avatar controller. | Yes |
| weights | number[1-*] | Default controller weights. | No |
| location | string | URI where controllers data may be found. | No |

The "description" property describes the avatar controller set and its usage. For example, the "description" property may be used in a user interface to help the user understand the intention of the controller set.

The "purpose" property contains a string that identifies the purpose of the avatar controller set. The "purpose" property follows predetermined values, which may be defined by an application or a standard. In some embodiments, this property may be an enumeration (enum).

The "controllers" list defines the controllers to use and how to use them.

The "weights" property defines the default controller weights to use. The length of this array is equal to the number of items in "controllers". These controller weights replace the corresponding ones in the "weights" property of "MPEG_controllers".

The "location" property is introduced by this disclosure and is an URI where the controllers may be found. Each controller in this referenced container may be referenced by items of the "controllers" array.

### AvatarController

The AvatarController property is shown below in Table 6.

**Table 6.**

| **Name** | **Type** | **Description** | **Required** |
|---|---|---|---|
| description | string | Describe the avatar controller and its purpose (to be used in UI for instance). | No |
| purpose | string | Defines the main purpose of the avatar controller. | No |
| controller | integer | Index of a controller in "MPEG_controllers" extension. | No |
| remoteController | integer | Index of a controller in the container referenced by the "location" property of the parent AvatarControllerSet. | No |
| range | number[2] | Minimum and maximum values for the controller weight. | No |

The "description" property describes the avatar controller and its usage. For example, the "description" property may be used in a user interface to help the user understand what the controller was intended for.

The "purpose" property contains a string that identifies the purpose of the avatar controller. The "purpose" property follows predetermined values, which may be defined by an application or a standard. In some embodiments, the type of this property is an enumeration (enum).

The "controller" property references a controller in the "controllers" list of the "MPEG_controllers" extension. For some embodiments, the "controller" property must not be defined if "remoteController" is defined.

The "remoteController" property references a controller in the container referenced by the "location" property in the AvatarControllerSet that contains this AvatarController. For some embodiments, the "remoteController" property must not be defined if "controller" is defined.

The "range" property defines the minimum and maximum value of the controller weight.

### MARF Processing Model

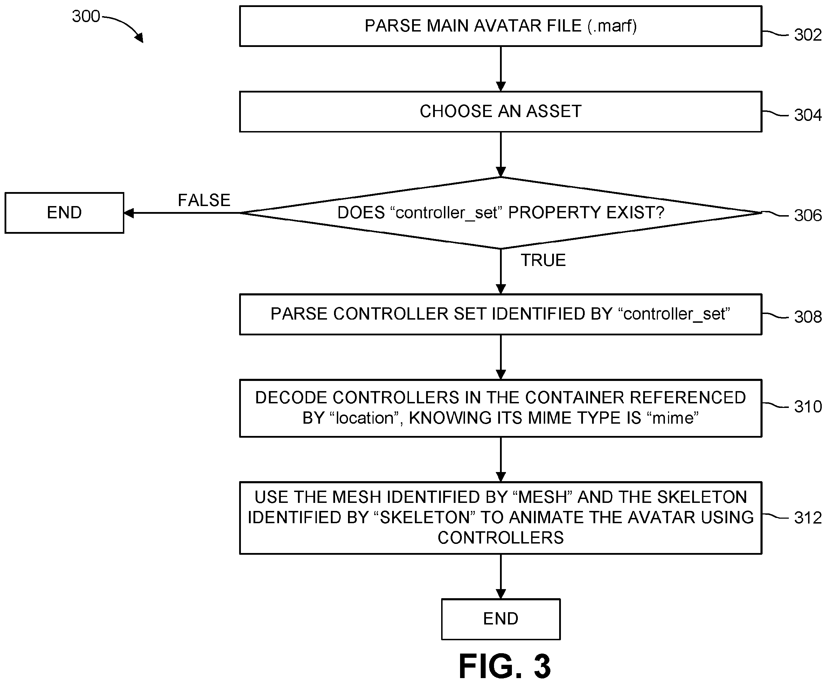

FIG. 3 is a flowchart illustrating an example process for parsing a MARF file with controllers according to some embodiments. FIG. 3 shows an example process 300 for parsing a MARF file with controllers.

In step 302, the main avatar file (.marf) is parsed. In step 304, the application chooses an asset in the MARF file. In step 306, a determination is made regarding whether the "controller_set" property exists. If the asset has no "controller_set" property, there are no controllers for this asset, and the process ends. If the asset has a "controller_set" property, then the process 300 continues to step 308.

In step 308, the controller set referenced or identified by "controller_set" is parsed for the "controllers" property in the "components" root property of the MARF file. In step 310, the controllers in the container referenced by the "location" property of the controller set are decoded. In step 312, the mesh identified by the "mesh" property of the controller set and the skeleton identified by the "skeleton" property of the controller set are used to animate the avatar with the controllers and then the process ends.

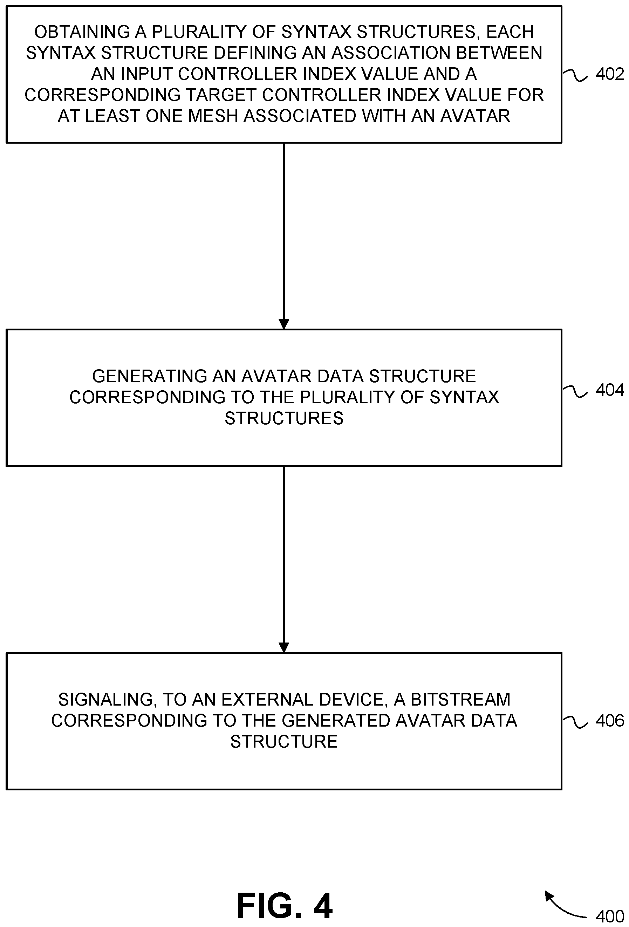

FIG. 4 is a flowchart illustrating an example process for generating an avatar controller data structure according to some embodiments. For some embodiments, an example process 400 may include obtaining 402 a plurality of syntax structures, each syntax structure defining an association between an input controller index value and a corresponding target controller index value for at least one mesh associated with an avatar. For some embodiments, the example process 400 may further include generating 404 an avatar data structure corresponding to the plurality of syntax structures. For some embodiments, the example process 400 may further include signaling 406, to an external device, a bitstream corresponding to the generated avatar data structure.

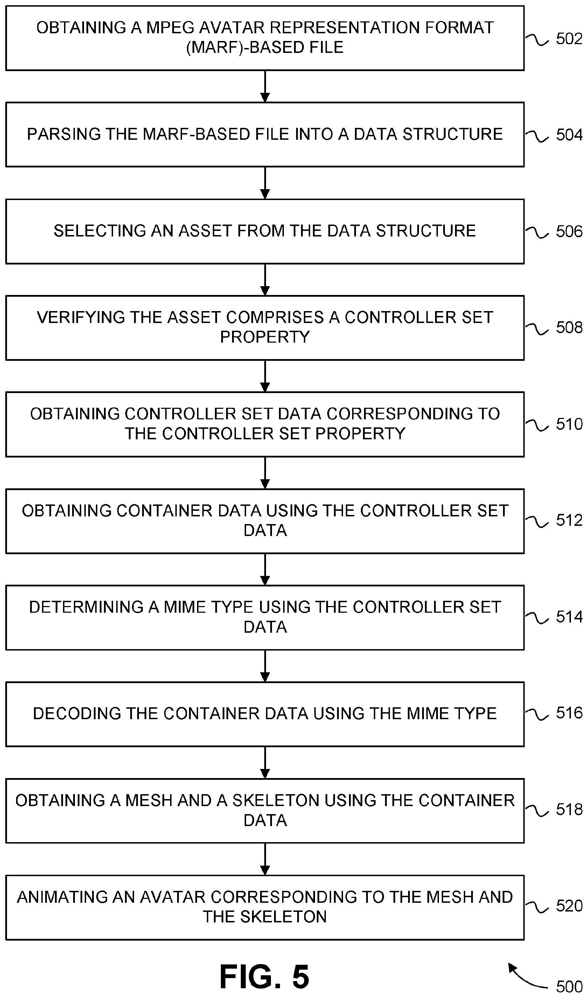

FIG. 5 is a flowchart illustrating an example process for generating an avatar controller data structure according to some embodiments. For some embodiments, an example process 500 may include obtaining 502 a MPEG Avatar Representation Format (MARF)-based file. For some embodiments, the example process 500 may further include parsing 504 the MARF-based file into a data structure. For some embodiments, the example process 500 may further include selecting 506 an asset from the data structure; For some embodiments, the example process 500 may further include verifying 508 the asset comprises a controller set property. For some embodiments, the example process 500 may further include obtaining 510 controller set data corresponding to the controller set property. For some embodiments, the example process 500 may further include obtaining 512 container data using the controller set data. For some embodiments, the example process 500 may further include determining 514 a mime type using the controller set data. For some embodiments, the example process 500 may further include decoding 516 the container data using the mime type. For some embodiments, the example process 500 may further include obtaining 518 a mesh and a skeleton using the container data. For some embodiments, the example process 500 may further include animating 520 an avatar corresponding to the mesh and the skeleton.

For some embodiments, an example method using data formatted into a MARF-based, AJIF-based, and/or gITF-based data structure format may further include encoding and/or decoding of the data formatted into a MARF-based, AJIF-based, and/or gITF-based data structure format.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a MPEG Avatar Representation Format (MARF)-based file; parsing the MARF-based file into a data structure; selecting an asset from the data structure; verifying the asset comprises a controller set property; obtaining controller set data corresponding to the controller set property; obtaining container data using the controller set data; determining a mime type using the controller set data; decoding the container data using the mime type; obtaining a mesh and a skeleton using the container data; and animating an avatar corresponding to the mesh and the skeleton.

For some embodiments of the example method, animating the avatar corresponding to the mesh and the skeleton comprises applying one or more transformations to the mesh associated with the avatar.

For some embodiments of the example method, the controller set data comprises the one or more transformations.

For some embodiments of the example method, the controller set data comprises a link to a location storing a set of controller data structures corresponding to the avatar.

For some embodiments of the example method, the link comprises a Uniform Resource Identifier (URI).

For some embodiments of the example method, the link comprises an index into a data location array.

Some embodiments of the example method may further include retrieving information corresponding to the avatar using the link.

For some embodiments of the example method, the MARF-based file comprises a container corresponding to controller data for the avatar.

For some embodiments of the example method, parsing the MARF-based file into a data structure comprises determining one or more links to data structures corresponding to the avatar.

For some embodiments of the example method, the data structure complies with a MARF-based format

For some embodiments of the example method, the container data comprises information corresponding to at least one of a mesh, a skeleton, a mime type, and a location of the avatar.

For some embodiments of the example method, the mime type identifies a format of a controller associated with the avatar.

For some embodiments of the example method, the mime type identifies at least one of an Avatar JSON Interchange Format (AJIF)-based format, and a Graphics Library Transmission Format (gITF)-based format.

For some embodiments of the example method, the location of the avatar comprises a Uniform Resource Identifier (URI).

An example apparatus in accordance with some embodiments may include: a processor; and a memory storing instructions operative, when executed by the processor, to cause the apparatus to perform any one of the methods listed above.

An example method in accordance with some embodiments may include: obtaining a plurality of syntax structures, each syntax structure defining an association between an input controller index value and a corresponding target controller index value for at least one mesh associated with an avatar; generating an avatar data structure corresponding to the plurality of syntax structures; and signaling, to an external device, a bitstream corresponding to the generated avatar data structure.

Some embodiments of the example method may further include: selecting one of the syntax structures; and applying, to a mesh associated with the avatar, a transformation using the selected syntax structure.

Some embodiments of the example method may further include: applying, to a mesh associated with the avatar, one or more transformations using the plurality of syntax structures, wherein the one or more transformations correspond to an animation associated with the avatar.

For some embodiments of the example method, the avatar data structure comprises a set of controller data structures corresponding to the avatar.

For some embodiments of the example method, the avatar data structure comprises a link to a location storing a set of controller data structures corresponding to the avatar.

For some embodiments of the example method, the link comprises a Uniform Resource Identifier (URI).

For some embodiments of the example method, the link comprises an index into a data location array.

Some embodiments of the example method may further include retrieving information corresponding to the avatar using the link.

Some embodiments of the example method may further include: obtaining a MPEG Avatar Representation Format (MARF)-based file; generating a container file, wherein the container file comprises data corresponding to the syntax structures; and updating the MARF-based file to reference the generated container file, wherein the updated MARF-based file comprise information linking the avatar to the data corresponding to the syntax structures.

Some embodiments of the example method may further include determining a link between the avatar and the data corresponding to the syntax structures.

For some embodiments of the example method, the avatar data structure is a first avatar data structure; and generating the avatar data structure corresponding to the plurality of syntax structures comprises: generating a second avatar data structure corresponding to a protocol format, and encoding the second avatar data structure to generate the first avatar data structure.

For some embodiments of the example method, the avatar data structure comprises information corresponding to at least one of a mesh, a skeleton, a mime type, and a location of the avatar.

For some embodiments of the example method, the mime type identifies a format of a controller associated with the avatar.

For some embodiments of the example method, the avatar data structure complies with at least one of an MPEG Avatar Representation Format (MARF)-based format, an Avatar JSON Interchange Format (AJIF)-based format, and a Graphics Library Transmission Format (gITF)-based format.

An example apparatus in accordance with some embodiments may include: a processor; and a memory storing instructions operative, when executed by the processor, to cause the apparatus to perform any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a MPEG Avatar Representation Format (MARF)-based file;
parsing the MARF-based file into a data structure;
selecting an asset from the data structure;
verifying the asset comprises a controller set property;
obtaining controller set data corresponding to the controller set property;
obtaining container data using the controller set data;
determining a mime type using the controller set data;
decoding the container data using the mime type;
obtaining a mesh and a skeleton using the container data; and
animating an avatar corresponding to the mesh and the skeleton.

2. The method of claim 1, wherein animating the avatar corresponding to the mesh and the skeleton comprises applying one or more transformations to the mesh associated with the avatar.

3. The method of claim 2, wherein the controller set data comprises the one or more transformations.

4. The method of any one of claims 1-3, wherein the controller set data comprises a link to a location storing a set of controller data structures corresponding to the avatar.

5. The method of claim 4, wherein the link comprises a Uniform Resource Identifier (URI).

6. The method of any one of claims 1-5, wherein the link comprises an index into a data location array.

7. The method of any one of claims 4-6, further comprising retrieving information corresponding to the avatar using the link.

8. The method of any one of claims 1-7, wherein the MARF-based file comprises a container corresponding to controller data for the avatar.

9. The method of any one of claims 1-8, wherein parsing the MARF-based file into a data structure comprises determining one or more links to data structures corresponding to the avatar.

10. The method of any one of claims 1-9, wherein the data structure complies with a MARF-based format.

11. The method of any one of claims 1-10, wherein the container data comprises information corresponding to at least one of a mesh, a skeleton, a mime type, and a location of the avatar.

12. The method of claim 11, wherein the mime type identifies a format of a controller associated with the avatar.

13. The method of claim 11, wherein the mime type identifies at least one of an Avatar JSON Interchange Format (AJIF)-based format, and a Graphics Library Transmission Format (gITF)-based format.

14. The method of claim 11, wherein the location of the avatar comprises a Uniform Resource Identifier (URI).

15. An apparatus comprising:
a processor; and
a memory storing instructions operative, when executed by the processor, to cause the apparatus to perform the method of any one of claims 1 through 14.
